# EUROPEAN PATENT APPLICATION

(11) **EP 2 093 405 A1**
(43) Date of publication of application: **26.08.2009**
(21) Application number: 07850560.9
(22) Date of filing: 13.12.2007
(51) Int. Cl.: F02D 45/00, F02D 41/04

(54) **VEHICLE CONTROL METHOD AND VEHICLE CONTROL DEVICE**

(30) Priority: 14.12.2006 JP 2006336563; 11.05.2007 JP 2007127172
(71) Applicant: TOYOTA JIDOSHA KABUSHIKI KAISHA, Toyota-shi, Aichi 471-8571 (JP)
(72) Inventor: KAWAI, Keisuke, Toyota-shi Aichi 471-8571 (JP)
(74) Representative: TBK-Patent
(86) International application number: PCT/JP2007/074040
(87) International publication number: WO 2008/072698

(57) **Abstract**

A calculation load of a vehicle control apparatus is reduced.

When a control target value is determined by mediating three or more requests having set priorities relative to a control variable to be controlled in a vehicle, these requests are sequentially selected in descending order of the priorities and a request overlap portion is sequentially calculated. If, at this time, there is no request overlap portion in the middle of the process, the control target value is determined by omitting the process of calculating the request overlap portion for requests having lower priorities than the request, in relation to which the request overlap portion no longer exists. When there is no longer a request overlap portion, a value closest to a request selected last in a range of the request overlap portion existing last is determined as the control target value. The priorities are set based on an operating condition of the vehicle.

## Description

### Technical Field

The present invention relates to a vehicle control method and a vehicle control apparatus.

### Background Art

JP-A-2004-52769 discloses, in a control method for a vehicle drive unit, wherein at least one output variable of the drive unit is set as a function of target value setting variables, a method forming a target value that takes into account the target value setting variables in their orders of priority (see Claim 1 or the like of the publication). Paragraph 0008 of the publication says that the method allows every target value setting variable to be included in formation of the target value.

The publication also states, more specifically, that the target value setting variables are considered starting with the target value setting variable having the lowest priority (see Claim 2 or the like of the publication).
This is said to assure that the target value setting variable having the highest priority is converted lastly and thus completely (see paragraph 0010 of the publication).

Patent Document 1: JP-A-2004-52769

### Disclosure of Invention

### Problems to be Solved by the Invention

The method described in the above-cited publication, however, makes it necessary, in determining finally the target value, to mediate invariably all target value setting variables covering from the target value setting variable of the lowest priority to the target value setting variable of the highest priority. As a result, there is a problem in that a calculation load of an arithmetic unit within a control apparatus tends to become large. In recent years, there has been a need, in the field of vehicle control, for processing demands from various viewpoints, such as engine protection, OBD (on-board diagnostic), fail-safe, and the like, in addition to fuel efficiency, emissions, and driveability. The calculation load of the control apparatus steadily increases and, as a result, there is an urgent need for reducing the calculation load of the control apparatus.

The present invention has been made to solve the foregoing problems and it is an object of the present invention to provide a vehicle control method and a vehicle control apparatus capable of reducing the calculation load of the control apparatus.

### Means for Solving the Problem

First aspect of the present invention is a vehicle control method determining a control target value by, if there are three or more requests having set priorities relative to a control variable to be controlled in a vehicle, mediating the requests,
wherein the method determines the control target value, when sequentially selecting the requests in descending order of the priorities and sequentially calculating a request overlap portion and if there is no request overlap portion, by omitting a process of calculating the request overlap portion for requests having lower priorities than a request, in relation to which a request overlap portion no longer exists.

Second aspect of the present invention is the vehicle control method according to the first aspect,
wherein, when the request overlap portion no longer exists, the method determines as the control target value a value closest to a request selected last in a range of the request overlap portion existing last.

Third aspect of the present invention is the vehicle control method according to the first or the second aspect,
wherein the priorities are set based on an operating condition of the vehicle.

Fourth aspect of the present invention is a vehicle control method comprising the steps of:
outputting a request from each of three or more control logics having specific purposes relative to a control variable to be controlled in a vehicle;
setting priorities for the three or more requests;
sequentially selecting the three or more requests in descending order of the priorities and sequentially calculating a request overlap portion and, if there is no request overlap portion, temporarily stopping a process of calculating the request overlap portion for requests having lower priorities than the request, in relation to which there is no request overlap portion;
transmitting information, when the calculation process in the step of calculating the request overlap portion is temporarily stopped, on results of calculation processes performed so far to a control logic that has outputted the request selected when there is no longer request overlap portion, specifically, a request unfulfillment control logic; and
making the request unfulfillment control logic perform request reconsideration as to whether to let the logic output a request corrected based on the information transmitted thereto or withdraw the request.

Fifth aspect of the present invention is the vehicle control method according to the fourth aspect, further comprising the step of:
resuming the process of calculating the request overlap portion when the request unfulfillment control logic outputs a corrected request or withdraws the request.

Sixth aspect of the present invention is a vehicle control apparatus determining a control target value by, if there are three or more requests having set priorities relative to a control variable to be controlled in a vehicle, mediating the requests, the device comprising:
a request overlap portion calculation means sequentially selecting the requests in descending order of the priorities and sequentially calculating a request overlap portion; and
a determination means determining, if there is no request overlap portion, the control target value by making the request overlap portion calculation means omit a process of calculating the request overlap portion for requests having lower priorities than a request, in relation to which a request overlap portion no longer exists.

Seventh aspect of the present invention is the vehicle control apparatus according to the sixth aspect,
wherein, when the request overlap portion no longer exists, the determination means determines as the control target value a value closest to a request selected last in a range of the request overlap portion existing last.

Eighth aspect of the present invention is the vehicle control apparatus according to the sixth or the seventh aspect, further comprising a setting means setting the priorities based on an operating condition of the vehicle.

Ninth aspect of the present invention is a vehicle control apparatus comprising:
a request output means outputting a request from each of three or more control logics having specific purposes relative to a control variable to be controlled in a vehicle;
a priority setting means setting priorities for the three or more requests;
a request overlap portion calculation means sequentially selecting the three or more requests in descending order of the priorities and sequentially calculating a request overlap portion and, if there is no request overlap portion, temporarily stopping a process of calculating the request overlap portion for requests having lower priorities than the request, in relation to which there is no request overlap portion;
an information transmission means transmitting information, when the calculation process performed by the request overlap portion calculation means is temporarily stopped, on results of calculation processes performed so far to a control logic that has outputted the request selected when there is no longer request overlap portion, specifically, a request unfulfillment control logic; and
a request reconsideration means making the request unfulfillment control logic output a request corrected based on the information transmitted or withdraw the request.

Tenth aspect of the present invention is the vehicle control apparatus according to the ninth aspect, further comprising a request overlap portion calculation resumption means resuming the process of calculating the request overlap portion when the request unfulfillment control logic outputs a corrected request or withdraws the request.

### Advantages of the Invention

In accordance with the first aspect of the present invention, when a control target value is determined by mediating three or more requests having set priorities relative to a control variable to be controlled in a vehicle, these requests are sequentially selected in descending order of the priorities and a request overlap portion is sequentially calculated. If there is no request overlap portion, the control target value can be determined by omitting the process of calculating the request overlap portion for requests having lower priorities than the request, in relation to which the request overlap portion no longer exists. This allows the process of calculating the request overlap portion to be omitted for requests having lower priorities than the request, in relation to which the request overlap portion no longer exists, when there is no longer a request overlap portion. Accordingly, as compared with a case, in which the process of calculating the request overlap portion is performed for all requests concerned at all times, a calculation load of a control apparatus can be substantially reduced. Additionally, in this case, the requests to be omitted are those that are not reflected in the final control target value and that have lower priorities. For this reason, even with the abovementioned omission, the requests having higher priorities are appropriately reflected in the control target value. Accordingly, the control target value can be appropriately determined, while reducing the calculation load of the control apparatus.

In accordance with the second aspect of the present invention, when the request overlap portion no longer exists, a value closest to the request selected last in a range of the request overlap portion existing last can be determined as the control target value. This allows the control target value, in which the request selected last, specifically the request that is not to be fulfilled, is taken into consideration to some degree, to be calculated.

In accordance with the third aspect of the present invention, the priorities are set based on an operating condition of the vehicle. This allows priorities of a plurality of requests to be changed according to the vehicle operating condition. Accordingly, the plurality of requests can be satisfied in an optimum balance according to the condition.

In accordance with the fourth aspect of the present invention, when a control target value is determined by mediating three or more requests having set priorities relative to a control variable to be controlled in a vehicle, these requests are sequentially selected in descending order of the priorities and a request overlap portion is sequentially calculated. If there is no request overlap portion, the process of calculating the request overlap portion for requests having lower priorities than the request, in relation to which the request overlap portion no longer exists, is temporarily stopped. The information on the results of calculation performed so far can then be transmitted to the control logic that has outputted the request having no request overlap portions, specifically the request unfulfillment control logic. Further, the request unfulfillment control logic can output a request corrected based on the information transmitted thereto or withdraw the request. As a result, the requests having priorities lower than that of the request having no request overlap portions can also be reflected in the control target value. Thus, an even more appropriate control target value can be determined.

In accordance with the fifth aspect of the present invention, the process of calculating the request overlap portion can be resumed when the request unfulfillment control logic outputs a corrected request or withdraws the request. This allows the requests having priorities lower than that of the request having no request overlap portions to be mediated also. Specifically, those requests can also be satisfied, so that an even more appropriate control target value can be determined.

In accordance with the sixth aspect of the present invention, when a control target value is determined by mediating three or more requests having set priorities relative to a control variable to be controlled in a vehicle, these requests are sequentially selected in descending order of the priorities and a request overlap portion is sequentially calculated. If there is no request overlap portion, the control target value can be determined by omitting the process of calculating the request overlap portion for requests having lower priorities than the request, in relation to which the request overlap portion no longer exists. This allows the process of calculating the request overlap portion to be omitted for requests having priorities lower than that of the request, in relation to which the request overlap portion no longer exists, when there is no longer a request overlap portion. Accordingly, as compared with a case, in which the process of calculating the request overlap portion is performed for all requests concerned at all times, a calculation load of a control apparatus can be substantially reduced. Additionally, in this case, the requests to be omitted are those that are not reflected in the final control target value and that have lower priorities. For this reason, even with the abovementioned omission, the requests having higher priorities are appropriately reflected in the control target value. Accordingly, the control target value can be appropriately determined, while reducing the calculation load of the control apparatus.

In accordance with the seventh aspect of the present invention, when the request overlap portion no longer exists, a value closest to the request selected last in a range of the request overlap portion existing last can be determined as the control target value. This allows the control target value, in which the request selected last, specifically the request that is not to be fulfilled, is taken into consideration to some degree, to be calculated.

In accordance with the eighth aspect of the present invention, the priorities are set based on an operating condition of the vehicle. This allows priorities of a plurality of requests to be changed according to the vehicle operating condition. Accordingly, the plurality of requests can be satisfied in an optimum balance according to the condition.

In accordance with the ninth aspect of the present invention, when a control target value is determined by mediating three or more requests having set priorities relative to a control variable to be controlled in a vehicle, these requests are sequentially selected in descending order of the priorities and a request overlap portion is sequentially calculated. If there is no request overlap portion, the process of calculating the request overlap portion for requests having lower priorities than the request, in relation to which the request overlap portion no longer exists, is temporarily stopped. The information on the results of calculation performed so far can then be transmitted to the control logic that has outputted the request having no request overlap portions, specifically the request unfulfillment control logic. Further, the request unfulfillment control logic can output a request corrected based on the information transmitted thereto or withdraw the request. As a result, the requests having priorities lower than that of the request having no request overlap portions can also be reflected in the control target value. Thus, an even more appropriate control target value can be determined.

In accordance with the tenth aspect of the present invention, the process of calculating the request overlap portion can be resumed when the request unfulfillment control logic outputs a corrected request or withdraws the request. This allows the requests having priorities lower than that of the request having no request overlap portions to be mediated also. Specifically, those requests can also be satisfied, so that an even more appropriate control target value can be determined.

### Brief Description of Drawings

Fig. 1 is a view for illustrating a system configuration of a first embodiment of the present invention;
Fig. 2 is a functional block diagram showing a case, in which an ECU controls a air fuel ratio of an internal combustion engine according to the first embodiment of the present invention;
Fig. 3 is a diagram for illustrating a technique with which a mediation section mediates a plurality of requests and determines a target air fuel ratio according to the first embodiment of the present invention;
Fig. 4 is a flowchart illustrating a routine that is executed by the first embodiment of the present invention;
Fig. 5 is a diagram for illustrating a technique with which a mediation section mediates a plurality of requests and determines a target air fuel ratio according to a second embodiment of the present invention; and
Fig. 6 is a flowchart illustrating a routine that is executed by the second embodiment of the present invention.

### Best Modes for Carrying out the Invention

### First Embodiment

### [Description of system configuration]

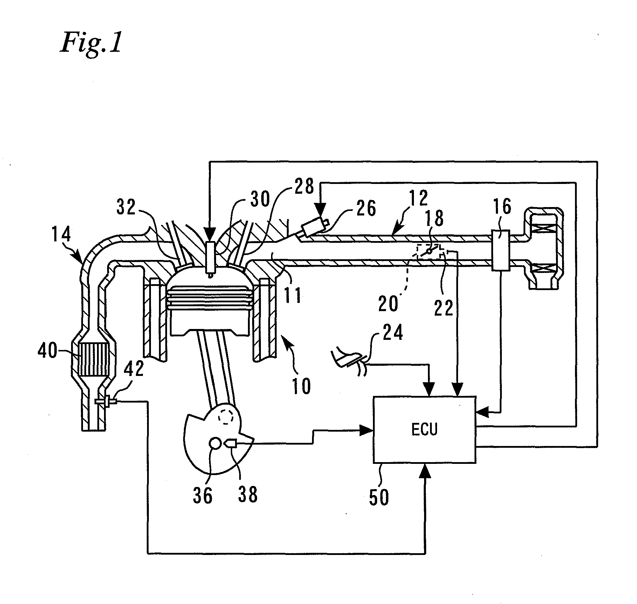

Fig. 1 is a view for illustrating a system configuration of a first embodiment of the present invention. Referring to Fig. 1, a system according to the first embodiment of the present invention includes an internal combustion engine 10. The internal combustion engine 10 is adapted to serve as a power drive source for a vehicle (automobile) not shown. In the first embodiment of the present invention, the vehicle may be an ordinary vehicle using only the internal combustion engine 10 as a power drive source, or a hybrid vehicle using also another power drive source, such as an electric motor or the like. In addition, the internal combustion engine 10 may have any number of cylinders and any cylinder arrangement that are not specifically limited.

An intake path 12 and an exhaust path 14 are in communication with a cylinder of the internal combustion engine 10. An air flow meter 16 detecting an intake air amount GA is disposed on the intake path 12. A throttle valve 18 is disposed downstream of the air flow meter 16. The throttle valve 18 is an electronic control valve driven by a throttle motor 20 based on an accelerator opening or the like. A throttle position sensor 22 for detecting an opening of the throttle valve 18 is disposed near the throttle valve 18. The accelerator opening is detected by an accelerator position sensor 24 disposed near an accelerator pedal.

A fuel injector 26 for injecting fuel into an intake port 11 is disposed at the cylinder of the internal combustion engine 10. It should be noted that the internal combustion engine 10 is not limited only to a port injection type as shown in Fig. 1; rather, a direct injection type injecting fuel directly into the cylinder or a type using both port injection and direction injection may be used. The cylinder of the internal combustion engine 10 further includes an intake valve 28, a spark plug 30, and an exhaust valve 32 disposed thereat.

It should be noted that, in accordance with the first embodiment of the present invention, the internal combustion engine 10 may be a compression ignition type, instead of a spark ignition type as shown in Fig. 1.

A crank angle sensor 38 for detecting a rotating angle of a crankshaft 36 is mounted near the crankshaft 36 of the internal combustion engine 10. A rotating position of the crankshaft 36, an engine speed NE (engine rotating speed), or the like can be detected according to an output of the crank angle sensor 38.

A catalyst 40 for purifying an exhaust gas is disposed midway in the exhaust path 14 of the internal combustion engine 10. The type of the catalyst 40 is not specifically limited. For example, a three-way catalyst, a storage reduction type NOx catalyst, a selective reduction type NOx catalyst, an oxidation catalyst, or any other type may be used. In addition, another catalyst may be disposed on an upstream or downstream side of the catalyst 40.

An oxygen sensor 42 is disposed on the exhaust path 14 at an outlet side (downstream side) of the catalyst 40. The oxygen sensor 42 produces an output that suddenly changes depending on whether an exhaust air fuel ratio at the outlet of the catalyst 40 is richer or leaner than a stoichiometric air fuel ratio. Alternatively, the oxygen sensor 42 may be a type that produces an output variable linearly according to the exhaust air fuel ratio at the outlet of the catalyst 40.

The system according to the first embodiment of the present invention further includes an ECU (electronic control unit) 50. Sensors and actuators of the various types described above are connected to the ECU 50. The ECU 50 controls an operating condition of the internal combustion engine 10 based on outputs of these sensors.

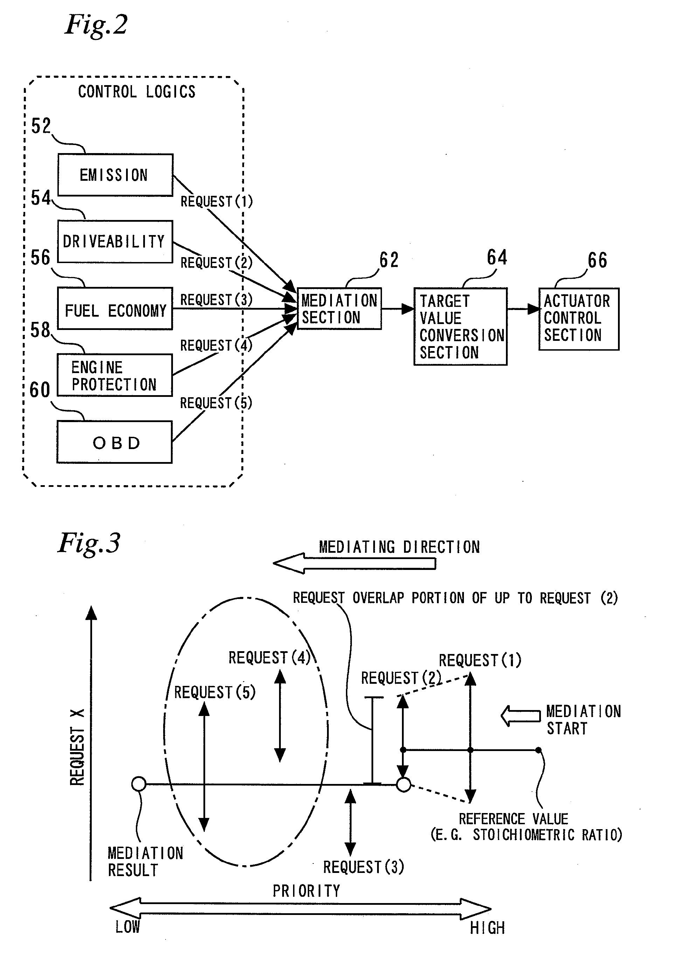

Fig. 2 is a functional block diagram showing a case, in which the ECU 50 controls the air fuel ratio of the internal combustion engine 10. Referring to Fig. 2, the ECU 50 includes a plurality of control logics (or control units, control modules) issuing requests relative to the same physical quantity (herein, the air fuel ratio) from various viewpoints (purposes). As an example, in the description that follows hereunder, the ECU 50 is adapted to include the following five control logics: an emission control logic 52, a driveability control logic 54, a fuel economy control logic 56, an engine protection control logic 58, and an OBD control logic 60. Specifically, the emission control logic 52 issues a request relative to the air fuel ratio from a viewpoint of reducing emissions; the driveability control logic 54 issues a request relative to the air fuel ratio from a viewpoint of improving driveability; the fuel economy control logic 56 issues a request relative to the air fuel ratio from a viewpoint of reducing fuel consumption; the engine protection control logic 58 issues a request relative to the air fuel ratio from a viewpoint of preventing a main body of the internal combustion engine 10, the catalyst 40, and the like from being damaged; and the OBD control logic 60 issues a request relative to the air fuel ratio from a viewpoint of implementing the OBD (on-board diagnostic), such as, for example, detection of degradation of the catalyst 40 and the like. It should be noted that, according to the first embodiment of the present invention, an arrangement may be made to let an individual ECU achieve a corresponding one of the different control logics, in addition to the arrangement, in which each of the different control logics is achieved by the common ECU 50.

The request issued by each of the abovementioned control logics is aggregated in a mediation section 62. Priority is established for each of these requests based on the operating condition (operating mode) of the vehicle. Specifically, operating modes of various types are made available for the ECU 50, including an emission preferential mode, a driveability preferential mode, a fuel economy preferential mode, and the like. One of these operating modes is selected according to the vehicle operating condition.

In this case, the "vehicle operating condition" may be made to correspond, for example, to timings when the internal combustion engine 10 is started, when the engine 10 is cold, during steady-state operation, during transient operation, during idling, under light load, under heavy load, and the like. Alternatively, the "vehicle operating condition" may be made to correspond, for example, to a running mode, such as a sports mode, economy mode, and the like, selected through an operation performed by a driver.

Priority given to the request from each control logic is adapted to vary according to each of the above operating modes. For example, in the emission preferential mode, priorities are set in the order of (1) emission, (2) fuel economy, (3) driveability, (4) engine protection, and (5) OBD. In the driveability preferential mode, priorities are set in the order of (1) driveability, (2) fuel economy, (3) emission, (4) engine protection, and (5) OBD.

The mediation section 62 mediates the requests relative to the air fuel ratio issued from each of the control logics according to the priorities established as described above to determine finally a target air fuel ratio (control target value). A target value conversion section 64 converts the target air fuel ratio finally determined by the mediation section 62 to corresponding command values for actuators required to achieve the target air fuel ratio. In the case of the first embodiment of the present invention, the command values for the actuators are a fuel injection amount from the fuel injector 26 and the opening of the throttle valve 18. An actuator control section 66 controls actuations of the fuel injector 26 and the throttle valve 18 so as to achieve the fuel injection amount and the throttle opening calculated by the target value conversion section 64.

Fig. 3 is a diagram for illustrating a technique with which the mediation section 62 mediates a plurality of requests and determines the target air fuel ratio. In Fig. 3, requests (1) through (5) are shown in the order of descending priorities. The mediation section 62 considers the requests in the order of descending priorities. Specifically, requests (1) and (2) are first considered and a request overlap portion, in which a range of request (1) overlaps a range of request (2), is calculated. For example, if request (1) ranges between 12 and 15 and request (2) ranges between 11 and 14, the request overlap portion is between 12 and 14.

In the example shown in Fig. 3, the range of request (2) is included in the range of request (1) and the request overlap portion of the two is equal to the range of request (2). Next, focus is placed on the request overlap portion of up to request (2), and request (3) having the next higher priority, to calculate the request overlap portion between the foregoing two. In the example shown in Fig. 3, there is no overlap portion between the request overlap portion of up to request (2), and request (3). In such cases, according to the first embodiment of the present invention, the target air fuel ratio is determined as follows.

First, comparing the request overlap portion of up to request (2), with request (3), the request overlap portion of up to request (2) has a higher priority. The target air fuel ratio is therefore determined, as selected from among the request overlap portion of up to request (2). At this time, consideration is also given to request (3) and the final target air fuel ratio is established at a value which is the closest to the range of request (3) in a range of the request overlap portion of up to request (2) (the value indicated by a white circle in Fig. 3).

In accordance with the first embodiment of the present invention, if there is no overlap portion between the request overlap portion of up to request (2), and request (3), as described above, the target air fuel ratio is to be determined by omitting processing for comparison with subsequent requests (requests (4) and (5) in Fig. 3) and calculation of request overlap portions. For the processing omitted, calculation load of the ECU 50 can be reduced.

In the above-referenced example, the target air fuel ratio is determined as selected from those falling within the request overlap portion of up to request (2). It should therefore be noted that requests (4) and (5) do not affect the target air fuel ratio. For this reason, omission of the processing to calculate the request overlap portions relative to requests (4) and (5) does not result in reduced accuracy of the target air fuel ratio finally determined.

### [Specific processes performed in the first embodiment]

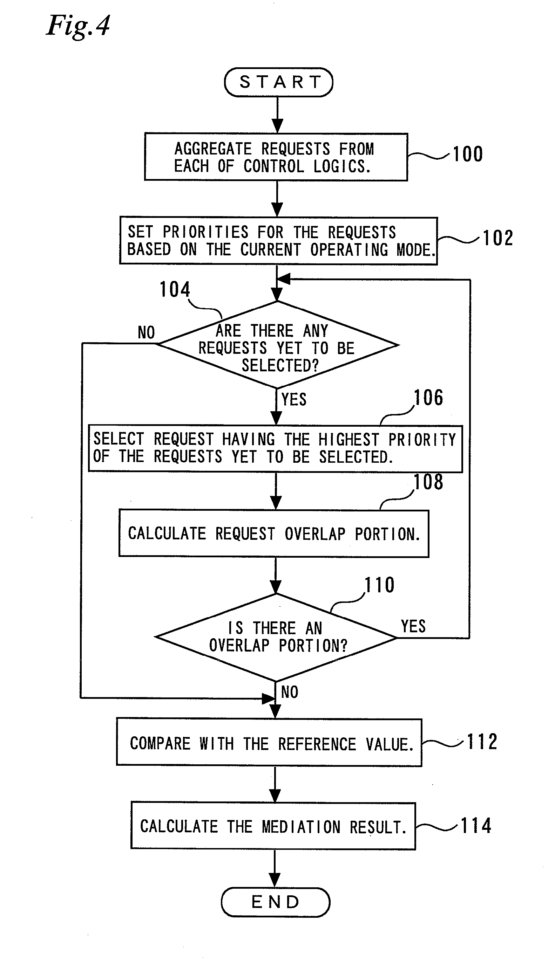

Fig. 4 is a flowchart showing a routine the ECU 50 according to the first embodiment of the present invention executes to achieve the foregoing functions. This routine is repeatedly executed at predetermined intervals or at each cycle of the internal combustion engine 10.

According to the routine shown in Fig. 4, the requests issued from each of the control logics relative to the air fuel ratio are first aggregated as described earlier with reference to Fig. 2 (step 100). It is then determined which operating mode of the above-described various types of operating modes is currently selected. Priorities are then set for the requests aggregated in step 100 based on the currently selected operating mode (step 102).

It is then determined whether or not there are requests yet to be selected of the requests aggregated (step 104). For the routine executed for a first time, none of the requests are yet to be selected and step 104 is to be answered in the affirmative. If step 104 is answered in the affirmative, the request having the highest priority of the requests yet to be selected is selected (step 106). For the routine executed for the first time, the request having the highest priority, specifically, request (1) shown in Fig. 3 is selected.

Following the process of step 106, the request overlap portion is calculated (step 108). If request (1) is selected in step 106, the range of request (1) is directly the request overlap portion. It is then determined whether or not there is a request overlap portion (step 110). If there is, processes of steps 104 and onward are executed a second time.

If the processes of steps 104 and onward are executed a second time, specifically, step 104 is answered in the affirmative and request (2) is selected in step 106. In step 108 that follows, a portion overlapping the request overlap portion of up to the preceding routine (equivalent, in this case, to the range of request (1)) and the newly selected request (2) is calculated as a new request overlap portion. In step 110 that follows, it is determined whether or not there is the new request overlap portion.
If there is, the processes of steps 104 and onward are executed again.

In this manner, the processes of steps 104 through 110 are repeatedly executed as long as there are a request overlap portion and a request yet to be selected. On the other hand, if it is determined that there is no request overlap portion in step 110, the request overlap portion existing last is compared with a predetermined reference value (e.g. the stoichiometric ratio) (step 112). The target air fuel ratio is then calculated as a result of mediation (step 114).

For example, in the example shown in Fig. 3, if request (3) is selected in step 106, the portion overlapping the request overlap portion of up to request (2), and request (3) is calculated as a new request overlap portion in step 108 that follows. In this case, because there is no such new request overlap portion, step 110 that follows is answered in the negative. Then in step 114, in a range of the request overlap portion existing last, specifically, in a range of the request overlap portion of up to request (2), the value that is closest to the range of request (3) is determined as the target air fuel ratio.

On the other hand, unlike the example shown in Fig. 3, there can be a case, in which there are request overlap portions left even after all requests aggregated are considered. In this case, step 104 is answered in the negative and processes of steps 112 and onward are executed. Specifically, the request overlap portion left is compared with the reference value (step 112); if the reference value falls within the request overlap portion, the reference value is determined as the target air fuel ratio (step 114). If the reference value falls outside the request overlap portion, a value that is closest to the reference value of those falling within the request overlap portion is determined as the target air fuel ratio.

As described heretofore, in accordance with the first embodiment of the present invention, when three or more requests having set priorities are mediated to determine a control target value, the mediation is performed starting with the higher priority side; if there no longer exists the request overlap portion, mediation processes for the requests having lower priorities lower than that of the request having no request overlap portions can be omitted. Accordingly, as compared with a case, in which the mediation processes are performed for all requests concerned at all times, the calculation load of the ECU 50 can be substantially reduced.

In this case, the requests to be omitted are those that are not reflected in the final control target value and that have lower priorities. For this reason, even with the abovementioned omission, the requests having higher priorities are appropriately reflected in the control target value. Accordingly, the control target value can be appropriately determined, while reducing the calculation load of the ECU 50.

Although the present invention has been described with particular reference to its exemplary first embodiment, in which the air fuel ratio of the internal combustion engine 10 is the control variable, the control variable to be governed by the present invention is not limited to the air fuel ratio. Specifically, the present invention is applicable to control quantities of various sorts to be controlled in vehicles, including, for example, torque or ignition timing of the internal combustion engine 10, torque of a drive wheel of the vehicle, or the like, in addition to the air fuel ratio.

The present invention has also been described with particular reference to its exemplary first embodiment, in which there exists a range in the request issued from each of the control logics. The present invention is nonetheless applicable to a case, in which part of those requests request a single value.

It is further to be noted that, in the first embodiment of the present invention, the ECU 50 executes the processes of steps 104, 106, and 108 to achieve the "request overlap portion calculation means" in the sixth aspect of the present invention described earlier. Further, the ECU 50 executes the processes of steps 110, 112, and 114 to achieve the "determination means" in the sixth aspect of the present invention described earlier.

### Second Embodiment

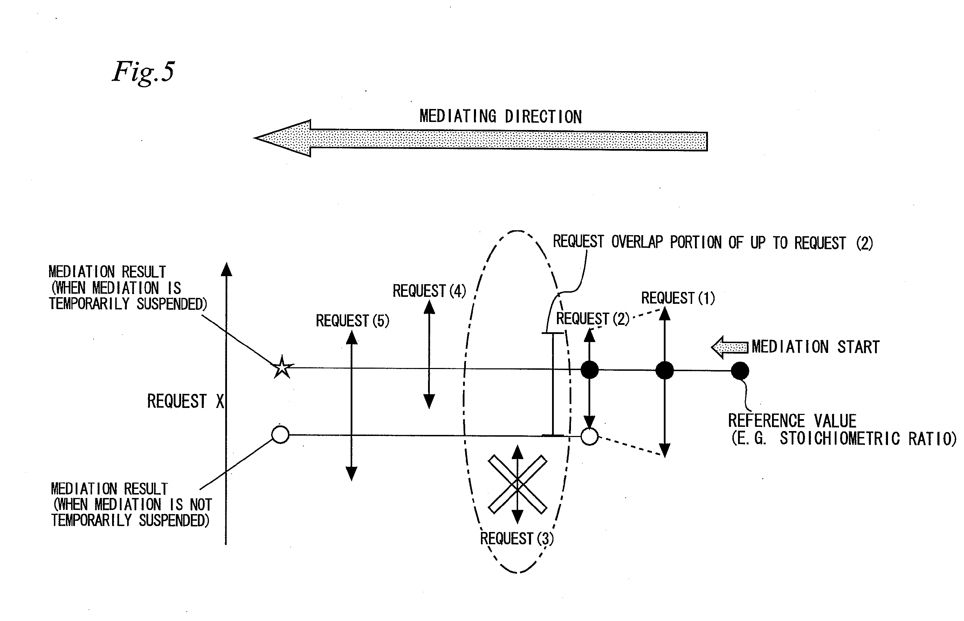

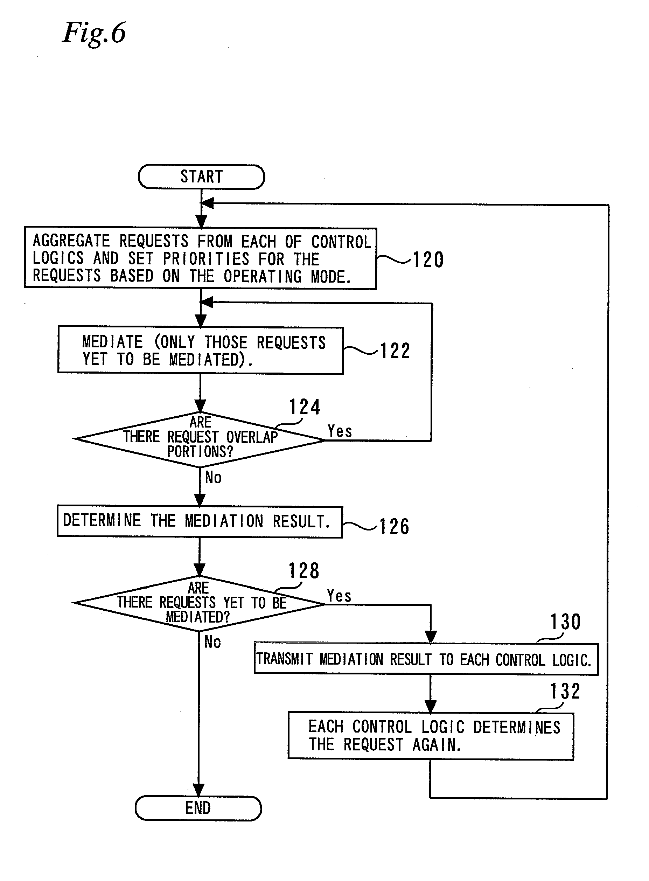

A second embodiment of the present invention will be described below with reference to Figs. 5 and 6. The second embodiment will be described with particular emphasis on differences from the first embodiment described above and duplicate descriptions are simplified or omitted. The second embodiment is achieved by making the ECU 50 execute, using the same system configuration as that shown in Figs. 1 and 2, a routine shown in Fig. 6 to be described later.

### [Characteristics of the second embodiment]

Fig. 5 is a diagram for illustrating a technique with which the mediation section 62 mediates a plurality of requests and determines the target air fuel ratio. In Fig. 5, requests (1) through (5) are issued in the same manner as in Fig. 3 described earlier. The requests (1) through (5) are selected sequentially in the order of descending priorities to calculate the request overlap portions sequentially.

In the example shown in Fig. 5, there is no request overlap portion existing between the request overlap portion of up to request (2), and request (3), when request (3) is selected. In such cases, in the second embodiment of the present invention, a value which is the closest to the range of request (3) in a range of the request overlap portion of up to request (2) (the value indicated by a white circle in Fig. 5) is considered provisionally as a mediation result and a process of calculating the subsequent request overlap portions is temporarily suspended. The information on the mediation result is then transmitted to each of the control logics that issue requests (3), (4), and (5). Having received the information, each control logic is adapted to correct or withdraw its own request as necessary based on the information. This process will hereinafter be referred to as "request reconsideration".

In the example shown in Fig. 5, the control logic outputting request (3) (request unfulfillment control logic) is to withdraw its own request upon request reconsideration. The control logic outputting request (4), on the other hand, is to maintain its own request without correcting the same. Similarly, the control logic outputting request (5) is to maintain its own request without correcting the same.

After the request reconsideration is made as described above, the mediation section 62 resumes the process of calculating the request overlap portion. Specifically, in the example shown in Fig. 5, with request (3) having been withdrawn, a request overlap portion between the request overlap portion of up to request (2), and request (4) is calculated; a request overlap portion between the request overlap portion just calculated and request (5) is calculated; the final target air fuel ratio (a star in Fig. 5) is determined as selected from a range of the last request overlap portion.

As described above, in the example shown in Fig. 5, information may be transmitted to the control logic, which outputs request (3) with no request overlap portions, informing that its request is not fulfilled, thereby encouraging the control logic to reconsider. Even more appropriate control is therefore possible as an entire system. If, for example, the control logic that outputs request (3) is the OBD control logic 60, information that the air fuel ratio request cannot be achieved is transmitted to the OBD control logic 60. This allows the OBD control logic 60 to determine that OBD control cannot be executed, stopping invoking of the OBD control.

Thereafter, the process of calculating the request overlap portion is resumed and an even more appropriate mediation result can thereby be achieved. Specifically, referring to Fig. 5, the mediation result of the second embodiment of the present invention (the star in Fig. 5) further satisfies request (4) which is not satisfied by the mediation result of the first embodiment of the present invention (the white circle in Fig. 5). It can therefore be said that the mediation result is even more appropriate.

It should be noted that, in the example shown in Fig. 5, the control logic outputting request (3) withdraws the request upon request reconsideration. Instead of withdrawing the request, a request with revised details may be outputted again in the present invention.

### [Specific processes performed in the second embodiment]

Fig. 6 is a flowchart showing a routine the ECU 50 according to the second embodiment of the present invention executes to achieve the foregoing functions. According to the routine shown in Fig. 6, requests issued by each of the control logics relative to the air fuel ratio are aggregated and then, based on the operating mode, priorities are set for the requests aggregated (step 120).

The requests are then mediated according to the priorities (step 122). In step 122, one request having the highest priority is selected from among those yet to be mediated and the process proceeds to the next step of step 124. In step 124, it is determined whether or not there are request overlap portions. If there are request overlap portions, the processes of steps 122 and onward are executed again.

If it is determined that there are no request overlap portions in step 124, a mediation result is next determined (step 126). This mediation result is to be a value which is closest to a non-overlapping request in a range of the request overlap portion existing lastly. It is to be noted that, if each request contains a reference value, the reference value is the mediation result.

It is next determined whether or not there are requests yet to be mediated (step 128). The "requests yet to be mediated" herein include those having no request overlap portions as a result of mediation.

If it is determined in step 128 that there are no requests yet to be mediated, the current execution of the routine is terminated. If it is determined in step 128 that there are requests yet to be mediated, on the other hand, information on the mediation result calculated in step 126 is transmitted to each of the control logics issuing the requests yet to be mediated (step 130). Based on the information on the mediation result received, each of the control logics corrects the request and reissues a revised one, or withdraws the request (step 132). The processes of steps 120 and onward are thereafter executed again to resume mediation processes.

It is to be noted that the information transmitted in step 130 may be, in the example of Fig. 5, the mediation result indicated by the white circle or the request overlap portion of up to request (2). In step 130, the information on the mediation result is transmitted to not only the request having no request overlap portion (request (3) in Fig. 5), but also the requests having priorities lower than that of the request having no request overlap portions(requests (4) and (5) in Fig. 5). The information on the mediation result may, instead, be transmitted only to the request having no request overlap portion.

In the second embodiment of the present invention described above, the ECU 50 executes the process of step 120 to achieve the "request output means" and the "priority setting means" in the ninth aspect of the present invention described earlier. Likewise, the ECU 50 executes the process of step 122 to achieve the "request overlap portion calculation means" in the ninth aspect of the present invention described earlier; the ECU 50 executes the process of step 130 to achieve the "information transmission means" in the ninth aspect of the present invention described earlier; the ECU 50 executes the process of step 132 to achieve the "request reconsideration means" in the ninth aspect of the present invention described earlier; and the ECU 50 executes again the process of step 122 by way of a loop from step 132 to step 120 to achieve the "request overlap portion calculation resumption means" in the tenth aspect of the present invention described earlier.

## Claims

1. A vehicle control method determining a control target value by, if there are three or more requests having set priorities relative to a control variable to be controlled in a vehicle, mediating the requests,
wherein the method determines the control target value, when sequentially selecting the requests in descending order of the priorities and sequentially calculating a request overlap portion and if there is no request overlap portion, by omitting a process of calculating the request overlap portion for requests having lower priorities than a request, in relation to which a request overlap portion no longer exists.

2. The vehicle control method according to claim 1,
wherein, when the request overlap portion no longer exists, the method determines as the control target value a value closest to a request selected last in a range of the request overlap portion existing last.

3. The vehicle control method according to claim 1 or 2,
wherein the priorities are set based on an operating condition of the vehicle.

4. A vehicle control method comprising the steps of:
outputting a request from each of three or more control logics having specific purposes relative to a control variable to be controlled in a vehicle;
setting priorities for the three or more requests;
sequentially selecting the three or more requests in descending order of the priorities and sequentially calculating a request overlap portion and, if there is no request overlap portion, temporarily stopping a process of calculating the request overlap portion for requests having lower priorities than the request, in relation to which there is no request overlap portion;
transmitting information, when the calculation process in the step of calculating the request overlap portion is temporarily stopped, on results of calculation processes performed so far to a control logic that has outputted the request selected when there is no longer request overlap portion, specifically, a request unfulfillment control logic; and
making the request unfulfillment control logic perform request reconsideration as to whether to let the logic output a request corrected based on the information transmitted thereto or withdraw the request.

5. The vehicle control method according to claim 4, further comprising the step of:
resuming the process of calculating the request overlap portion when the request unfulfillment control logic outputs a corrected request or withdraws the request.

6. A vehicle control apparatus determining a control target value by, if there are three or more requests having set priorities relative to a control variable to be controlled in a vehicle, mediating the requests, the device comprising:
a request overlap portion calculation means sequentially selecting the requests in descending order of the priorities and sequentially calculating a request overlap portion; and
a determination means determining, if there is no request overlap portion, the control target value by making the request overlap portion calculation means omit a process of calculating the request overlap portion for requests having lower priorities than a request, in relation to which a request overlap portion no longer exists.

7. The vehicle control apparatus according to claim 6,
wherein, when the request overlap portion no longer exists, the determination means determines as the control target value a value closest to a request selected last in a range of the request overlap portion existing last.

8. The vehicle control apparatus according to claim 6 or 7, further comprising a setting means setting the priorities based on an operating condition of the vehicle.

9. A vehicle control apparatus comprising:
a request output means outputting a request from each of three or more control logics having specific purposes relative to a control variable to be controlled in a vehicle;
a priority setting means setting priorities for the three or more requests;
a request overlap portion calculation means sequentially selecting the three or more requests in descending order of the priorities and sequentially calculating a request overlap portion and, if there is no request overlap portion, temporarily stopping a process of calculating the request overlap portion for requests having lower priorities than the request, in relation to which there is no request overlap portion;
an information transmission means transmitting information, when the calculation process performed by the request overlap portion calculation means is temporarily stopped, on results of calculation processes performed so far to a control logic that has outputted the request selected when there is no longer request overlap portion, specifically, a request unfulfillment control logic; and
a request reconsideration means making the request unfulfillment control logic output a request corrected based on the information transmitted or withdraw the request.

10. The vehicle control apparatus according to claim 9, further comprising a request overlap portion calculation resumption means resuming the process of calculating the request overlap portion when the request unfulfillment control logic outputs a corrected request or withdraws the request.
